# EUROPEAN PATENT APPLICATION

(11) **EP 3 200 548 A1**
(43) Date of publication of application: **02.08.2017**
(21) Application number: 15843484.5
(22) Date of filing: 26.03.2015
(51) Int. Cl.: H04W 76/00

(54) **METHOD AND DEVICE FOR REPORTING AND ACQUIRING TERMINAL CAPABILITY**

(30) Priority: 26.09.2014 CN 201410505763
(71) Applicant: ZTE Corporation, Shenzhen, Guangdong 518057 (CN)
(72) Inventor: CHEN, Zhongming, Shenzhen Guangdong 518057 (CN)
(74) Representative: Mozzi, Matteo
(86) International application number: PCT/CN2015/075154
(87) International publication number: WO 2016/045336

(57) **Abstract**

Method and device for reporting and acquiring a UE capability are provided, wherein the reporting method includes that: a UE reports to a base station indication information indicating that the UE has a dual connectivity support capability. Employment of the above technical solution provided in the present disclosure and employment of the technical means in which a UE reports to a base station indication information for indicating that the UE has a dual connectivity support capability solve the technical problem in the related art that the base station is incapable of learning that the UE has the dual connectivity support capability, thus enabling the base station to configure a suitable dual connectivity for the UE according to the dual connectivity capability of the UE, and enhancing user experience.

## Description

### Technical Field

The present disclosure relates to the field of communications and, more particularly, to a method and device for reporting and acquiring a UE capability.

### Background

Due to the lack of spectrum resources and the surge in the tremendous flow service of mobile users, the demand of using high-frequency points such as 3.5GHz for hot spot coverage is becoming increasingly evident, and nodes using low power become new application scenarios in order to increase user throughput and enhance mobile performance. However, because the signal attenuation of a high frequency point is relatively severe, a cell has a relatively small coverage, and does not share the site with the existing cell. Many companies and operators are now inclined to seek a new enhanced scheme. Dual connectivity is one of them. The UE can be connected with more than two network nodes at the same time under the dual connectivity, but the control plane connection is only connected with one of the cells, such as a macrocell. The time delay between different network nodes cannot be ignored. For example, a network node is a macro base station called a Master eNB (MeNB), while another network node is a small cell base station called a Secondary eNB (SeNB). Within the MeNB or the SeNB, carrier aggregation is supported. In addition, for the service cells on the MeNB and the SeNB, the downlink time difference can be less than 33 microseconds, and it is known as a synchronous dual connectivity. When the downlink time difference is greater than 33 microseconds, it is known as an asynchronous dual connectivity. The UE capability has a tremendous difference, and the related art has not disclosed about whether to support a dual connectivity and the degree of supporting. If the base station is incapable of accurately learning the dual connectivity support capability of the UE, configuring the dual connectivity that the UE does not support not only increases the interaction of signalling, but also worsens the UE experience.

There is still no solution for the above problems in the related art.

### Summary

In the embodiment of the present disclosure provides, a method and device for reporting and acquiring a UE capability are provided, so as to solve at least the technical problem that the base station is unable to whether the UE supports the dual connectivity.

According to an embodiment of the present disclosure, a method for reporting a UE capability is provided, and the method includes that: a UE reports, to a base station, indication information for indicating that the UE has a dual connectivity support capability.

In certain embodiments, the UE reports to the base station indication information for indicating that the UE has a dual connectivity support capability, including at least one of: the UE reporting, to the base station, a first indication information for indicating that the UE has a synchronous dual connectivity support capability when the UE supports the synchronous dual connectivity; and the UE reporting, to the base station, a second indication information for indicating that the UE has an asynchronous dual connectivity support capability when the UE supports the asynchronous dual connectivity.

In certain embodiments, the method further includes at least one of: the first indication information for indicating a synchronous dual connectivity of a frequency band combination corresponding to all carrier aggregations supported by the UE; or the first indication information for indicating a synchronous dual connectivity of a frequency band combination corresponding to a part of carrier aggregations supported by the UE and/or a frequency band combination other than the frequency band combination corresponding to the all carrier aggregations, when the UE supports the synchronous dual connectivity; and using the second indication information for individually indicating a frequency band combination that supports an asynchronous dual connectivity or to indicate a combination of frequency band combination numbers or a combination of frequency band combination indexes that supports the asynchronous dual connectivity when the UE supports the asynchronous dual connectivity.

In certain embodiments, the first indication information indicates the frequency band combination corresponding to the part of carrier aggregations by a bit value.

In certain embodiments, the indication information is used to indicate that the UE has a dual connectivity support capability in the following manner: individually indicating, in the indication information, respectively, each frequency band combination supported by the UE, or a combination of frequency band combination numbers or frequency band combination indexes in the carrier aggregations supported by the UE; and further indicating, in the indication information, a dual connectivity type of one of the following: each frequency band combination, the combination of frequency band combination numbers, and the combination of frequency band combination indexes, wherein the dual connectivity type includes the synchronous dual connectivity and the asynchronous dual connectivity.

According to another embodiment of the present disclosure, another method for acquiring a UE capability is provided, and the method includes: a base station receives indication information for indicating that the UE has a dual connectivity support capability, which is reported by the UE.

In certain embodiments, the base station receives the indication information for indicating that the UE has a dual connectivity support capability, which is reported by the UE, including one of: the base station receiving a first indication information reported by the UE when the UE supports the synchronous dual connectivity, wherein the first indication information indicates that the UE has a synchronous dual connectivity support capability; and the base station receiving a second indication information reported by the UE when the UE supports the asynchronous dual connectivity, wherein the second indication information indicates that the UE has an asynchronous dual connectivity support capability.

In certain embodiments, the method further includes at least one of: when the UE supports the synchronous dual connectivity, the first indication information indicates a synchronous dual connectivity of a frequency band combination corresponding to all carrier aggregations supported by the UE; or the first indication information for indicates a synchronous dual connectivity of a frequency band combination corresponding to a part of carrier aggregations supported by the UE and/or a frequency band combination other than the frequency band combination corresponding to the all carrier aggregations; and when the UE supports the asynchronous dual connectivity, the second indication information individually indicates a frequency band combination that supports an asynchronous dual connectivity or to indicate a combination of frequency band combination numbers or a combination of frequency band combination indexes that supports the asynchronous dual connectivity.

In certain embodiments, the indication information is used to indicate that the UE has a dual connectivity support capability in the following manner: individually indicating, in the indication information, respectively, each frequency band combination supported by the UE, or a combination of frequency band combination numbers or frequency band combination indexes in the carrier aggregations supported by the UE; and further indicating, in the indication information, a dual connectivity type of one of the following: each frequency band combination, the combination of frequency band combination numbers, and the combination of frequency band combination indexes, wherein the dual connectivity type includes the synchronous dual connectivity and the asynchronous dual connectivity.

According to still another embodiment of the present disclosure, a device for reporting a UE capability is provided, which is applied to a UE, and the device includes: a reporting module configured to report, to a base station, indication information for indicating that the UE has a dual connectivity support capability.

According to still another embodiment of the present disclosure, a device for acquiring a UE capability is provided, which is applied to a base station, and the device includes: a receiving module configured to receive indication information reported by a UE, wherein the indication information indicates that the UE has a dual connectivity support capability.

In the embodiments of the present disclosure, the UE reports to a base station indication information for indicating that the UE has a dual connectivity support capability, thus solves the technical problem in the related art that the base station is incapable of learning that the UE has the dual connectivity support capability, thereby enabling the base station to configure a suitable dual connectivity for the UE according to the dual connectivity capability of the UE, and enhancing user experience.

### Brief Description of the Drawings

The drawings are described here to provide further understanding of the present disclosure, and form a part of the present disclosure. The schematic embodiments and description of the present disclosure are adopted to explain the present disclosure.
Fig. 1 is a flowchart of a method for reporting a UE capability according to an embodiment of the present disclosure.
Fig. 2 is a structure diagram of a device for reporting a UE capability according to an embodiment of the present disclosure.
Fig. 3 is a flowchart of a method for acquiring a UE capability according to an embodiment of the present disclosure.
Fig. 4 is a structure diagram of a device for acquiring a UE capability according to an embodiment of the present disclosure.
Fig. 5 is a flowchart of a method for acquiring a UE capability according to an exemplary embodiment of the present disclosure.

### Detailed Description of the Embodiments

The present disclosure is described below with reference to the drawings and the embodiments in detail. It is to be noted that the embodiments of the present disclosure and the characteristics in the embodiments may be combined with each other under the condition of no conflicts.

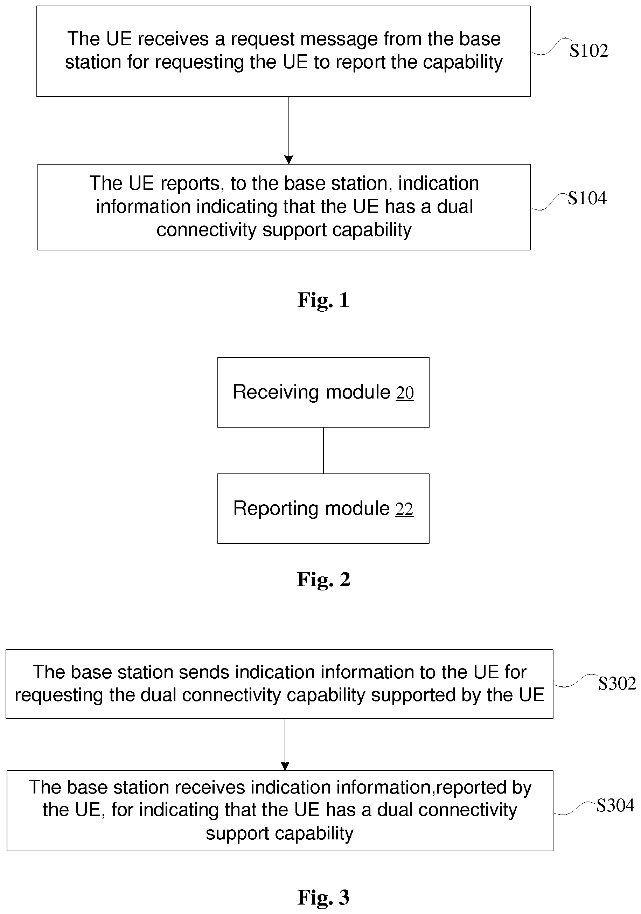

Fig. 1 is a flowchart of a method for reporting a UE capability according to an embodiment of the present disclosure. As shown in Fig. 1, the method includes the following steps.

At Step S102: The UE receives a request message from the base station for requesting the UE to report the capability.

At Step S104: The UE reports, to the base station, indication information for indicating that the UE has a dual connectivity support capability.

By the above respective processing steps, since the UE can report to the base station the indication information for indicating that the UE has a dual connectivity support capability, it is possible to make the base station learn that the UE has a dual connectivity support capability, fundamentally avoiding the issues such as increased signalling interaction since the base station is incapable of learning that the UE has the dual connectivity support capability, enhancing the user experience.

In an exemplary embodiment, Step S102 is optional. That is, the UE may report the above indication information at the request of the base station or actively report the above indication information.

Step S104 may be expressed as at least one of the following implementations: the UE reporting, to the base station, a first indication information for indicating that the UE has a synchronous dual connectivity support capability when the UE supports the synchronous dual connectivity; and the UE reporting, to the base station, a second indication information for indicating that the UE has an asynchronous dual connectivity support capability when the UE supports the asynchronous dual connectivity.

The first indication information is used to indicate a synchronous dual connectivity of a frequency band combination corresponding to all carrier aggregations supported by the UE; or the first indication information is used to indicate a synchronous dual connectivity of a frequency band combination corresponding to a part of carrier aggregations supported by the UE and/or a frequency band combination other than the frequency band combination corresponding to the all carrier aggregations, when the UE supports the synchronous dual connectivity.

The second indication information is used to individually indicate a frequency band combination that supports an asynchronous dual connectivity or to indicate a combination of frequency band combination numbers or a combination of frequency band combination indexes that supports the asynchronous dual connectivity when the UE supports the asynchronous dual connectivity.

In an exemplary embodiment, the first indication information indicates the frequency band combination corresponding to a part of carrier aggregations by a bit value when the UE supports the synchronous dual connectivity of the frequency band combination corresponding to the above part of carrier aggregations.

In an exemplary embodiment, the above indication information in Step S104 is also used to indicate that the UE has a dual connectivity support capability in the following manner:
individually indicating, in the indication information, each frequency band combination supported by the UE, or indicating a combination of frequency band combination numbers, or frequency band combination indexes in the carrier aggregations supported by the UE; and further indicating, in the indication information, a dual connectivity type of one of the following: each frequency band combination, or the combination of frequency band combination numbers, or the combination of frequency band combination indexes, wherein the dual connectivity type includes the synchronous dual connectivity and the asynchronous dual connectivity.

The embodiment of the present disclosure also provides a device for reporting a UE capability, applied to a UE. As shown in Fig. 2, the device includes:
a receiving module 20 configured to receive a request message from the base station for requesting the UE to report the capability; and
a reporting module 22 connected to the receiving module 20 and configured to report, to a base station, indication information for indicating that the UE has a dual connectivity support capability.

It should be noted that each of the above modules may be implemented by software or hardware, and may be expressed as the following form for the latter, but not limited thereto: the receiving module 20 and the reporting module 22 are located in the same processor, or the receiving module 20 and the reporting module 22 are located in the first processor and the second processor, respectively.

The embodiment of the present disclosure also provides a method for acquiring a UE capability. As shown in Fig. 3, the method includes the following steps.

At Step S302: The base station sends indication information to the UE for requesting the dual connectivity capability supported by the UE.

At Step S304: The base station receives indication information for indicating that the UE has a dual connectivity support capability, which is reported by the UE.

It is to be noted that Step S302 is optional.

The implementations of Step S302 may be expressed as at least one of the following forms, but not limited thereto: the above base station receiving a first indication information reported by the UE when the above UE supports the synchronous dual connectivity, wherein the first indication information indicates that the above UE has a synchronous dual connectivity support capability; and the above base station receiving a second indication information reported by the UE when the above UE supports the asynchronous dual connectivity, wherein the second indication information indicates that the above UE has an asynchronous dual connectivity support capability.

When the UE supports the synchronous dual connectivity, the above first indication information indicates a synchronous dual connectivity of a frequency band combination corresponding to all carrier aggregations supported by the above UE, or indicates a synchronous dual connectivity of a frequency band combination corresponding to a part of carrier aggregations supported by the above UE and/or a frequency band combination other than the frequency band combination corresponding to the above all carrier aggregations.

When the above UE supports the asynchronous dual connectivity, the above second indication information individually indicates a frequency band combination that supports an asynchronous dual connectivity, or indicates a combination of frequency band combination numbers or a combination of frequency band combination indexes that supports the asynchronous dual connectivity.

In certain embodiments, the above indication information indicates that the UE has a dual connectivity support capability in the following manner: individually indicating, in the above indication information, respectively, each frequency band combination supported by the UE, or indicating a combination of frequency band combination numbers or frequency band combination indexes in the carrier aggregations supported by the above UE; and further indicating, in the above indication information, a dual connectivity type of one of the following: each frequency band combination, the combination of frequency band combination numbers, and the combination of frequency band combination indexes, wherein the above dual connectivity type includes the synchronous dual connectivity and the asynchronous dual connectivity.

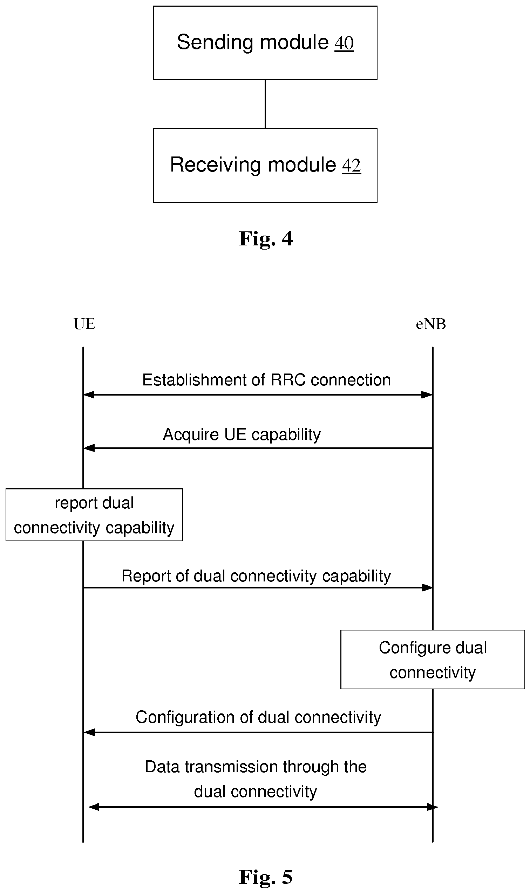

In an embodiment of the present disclosure, a device for acquiring a UE capability is provided, which is applied to a base station, and for implementing the method shown in Fig. 3. As shown in Fig. 4, the device includes:
a sending module 40 configured to send indication information to the UE for requesting the dual connectivity capability supported by the UE; and
a receiving module 42 connected to the sending module 40 and configured to receive indication information for indicating that the UE has a dual connectivity support capability, which is reported by the UE.

It should be noted that each of the above modules may be implemented by software or hardware, and may be expressed as the following form for the latter, but not limited thereto: the sending module 40 and the receiving module 42 are located in the same processor, or the sending module 40 and the receiving module 42 are located in the third processor and the fourth processor, respectively.

For a better understanding of the above embodiments, the following detailed description will be made with reference to exemplary embodiments. The design idea of the following exemplary embodiments is that 1) the UE supporting a synchronous dual connectivity reports whether or not the synchronous dual connectivity is supported, and if the support is reported, the synchronous dual connectivity of a frequency band combination of all carrier aggregations is supported, or it is a bit indication of each frequency band combination, that is, only a part of the frequency band combination is supported, and the frequency band combination other than the frequency band combination corresponding to the carrier aggregations can be included again; and 2) the UE supporting a asynchronous dual connectivity reports whether or not the asynchronous dual connectivity is supported, and if the support is reported, the supported frequency band combination is individually indicated, and it can be a combination of frequency band combinations on MeNB and SeNB, or a combination of frequency band combination numbers or indexes in the carrier aggregations. In addition, it is also possible to adopt the method mentioned in the above 2 for configuring the frequency band combination supporting the synchronous dual connectivity. That is, for the dual connectivity UE capability, both the synchronous dual connectivity and the asynchronous dual connectivity use the method of 2) to further distinguish which frequency band combination supports synchronous and asynchronous dual connectivity.

The following embodiment may be based on the flow shown in Fig. 5.

In the following embodiment, the base station 1 is a macro base station with three cells, in which cell 1 belongs to frequency band 1, cell 2 belongs to frequency band 2, and cell 3 belongs to frequency band 3. The base station 2 is a small cell base station with three cells, in which cell 4 belongs to frequency band 2, cell 5 belongs to frequency band 5, and cell 6 belongs to frequency band 6. The following embodiment describes the scenario that supports up to two and three frequency bands and the scenario that supports other number of frequency bands at most, and so on, which will not be described again.

### Embodiment one

The flow schematic diagram of the UE reporting the measuring capability and the base station configuring the dual connectivity according to the first embodiment of the present disclosure is shown in Fig. 5.

At Step 1: In this embodiment, the UE is in the connection state after the RRC establishment process is completed by the cell 1 in an Evolved Universal Mobile Telecommunication System Radio Access Network (E-UTRAN) system.

At Step 2: The base station requests the UE to report the capability information. The UE reports the following carrier aggregation capability information according to its own capability: the UE supports frequency bands 1, 2 and 5, and supports up to two carriers for aggregation, wherein the first frequency band and the second frequency band do not run in sequential order, just describing the support of the frequency on the first frequency band and the second frequency band for carrier aggregation. The capability of supporting carrier aggregation reported by the UE in the first embodiment can be as shown in Table 1.1. Assume that the carrier aggregation frequency band combination number is 5, the UE supports frequency band 1 and frequency band 2 for carrier aggregation.

**Table 1.1**

| Carrier aggregation frequency band combination number | A first frequency band | A second frequency band |
|---|---|---|
| 1 | 1 | NULL |
| 2 | 2 | NULL |
| 3 | 5 | NULL |
| 4 | 1 | 1 |
| 5 | 1 | 2 |
| 6 | 1 | 5 |
| 7 | 2 | 1 |
| 8 | 2 | 2 |
| 9 | 2 | 5 |

At Step 3: At the same time, the UE supports synchronous dual connectivity, and reports the capability of supporting synchronous dual connectivity. That is, the UE supports the synchronous dual connectivity of the frequency band combination in Table 1.1.

At Step 4: The UE does not support the asynchronous dual connectivity, so there is no capability of reporting asynchronous dual connectivity.

At Step 5: The base station acquires the capability information reported by the UE, and acquires the carrier aggregation and the synchronous dual connectivity of the UE supporting frequency band 1 and frequency band 2, while cell 1 belongs to frequency band 1, and cell 2 and cell 4 belong to frequency band 2.

At Step 6: Since the sevice increases, and the signal quality of cell 4 is better than that of cell 2 and the UE supports the synchronous dual connectivity of frequency band 1 and frequency band 2 according to the measurement report, the base station configures cell 4 for the UE, and the UE receives and sends data of the synchronous dual connectivity through cell 1 and cell 4.

In the above Step 3, if the UE only supports the synchronous dual connectivity of a part of the frequency band combinations in Table 1.1, it is possible to increase the indication whether the synchronous dual connectivity is supported in each frequency band combination, or otherwise it is represented by a bitmap. For example, the UE only supports the synchronous dual connectivity of the frequency band combinations 1, 2, 3, 5, and 6, the 111011000 is reported to the base station. The first bit from the left indicates the frequency band combination 1, and so on to the right. The bit is set to be 1 to indicate the synchronous dual connectivity that supports the frequency band combination.

In Step 3, if the UE also supports the synchronous dual connectivity of frequency band 5 and frequency band 5, but the UE does not support the carrier aggregation of frequency band 5 and frequency band 5 and there is no corresponding carrier aggregation frequency band combination number, the UE needs to report the following additional content, wherein the synchronous dual connectivity frequency band combination number in Table 1.2 cannot be the same as the carrier aggregation frequency band combination number in Table 1.1.

**Table 1.2**

| Synchronous dual connectivity frequency band combination number | A first frequency band | A second frequency band |
|---|---|---|
| 10 | 5 | 5 |

### Embodiment two

The flow schematic diagram of the UE reporting the measuring capability and the base station configuring the dual connectivity according to the second embodiment of the present disclosure is shown in Fig. 5.

At Step 1: In this embodiment, the UE is in the connection state after the RRC establishment process is completed by the cell 1 in the E-UTRAN system.

At Step 2: The base station requests the UE to report the capability information. The UE reports the following carrier aggregation capability information according to its own capability: the UE supports frequency bands 1, 2 and 5, and supports up to two carriers for aggregation, wherein the first frequency band and the second frequency band do not run in sequential order, just describing the support of the frequency on the first frequency band and the second frequency band for carrier aggregation. The capability of supporting carrier aggregation reported by the UE in the second embodiment can be as shown in Table 2.1. Assume that the carrier aggregation frequency band combination number is 5, and the UE supports frequency band 1 and frequency band 5 for carrier aggregation.

**Table 2.1**

| Carrier aggregation frequency band combination number | A first frequency band | A second frequency band |
|---|---|---|
| 1 | 1 | NULL |
| 2 | 2 | NULL |
| 3 | 5 | NULL |
| 4 | 1 | 2 |
| 5 | 1 | 5 |
| 6 | 2 | 1 |
| 7 | 2 | 5 |

At Step 3: At the same time, the UE supports synchronous dual connectivity, and reports the capability of supporting synchronous dual connectivity. That is, the UE supports the synchronous dual connectivity of the frequency band combination in Table 2.1.

At Step 4: At the same time, the UE supports asynchronous dual connectivity, and reports the capability of supporting asynchronous dual connectivity. That is, the UE directly reports the support of the asynchronous dual connectivity in Table 2.2, and does not need to separately indicate the capability of supporting asynchronous dual connectivity. The asynchronous dual connectivity frequency band combination number in the table can be the same as the carrier aggregation frequency band number in Table 2.1, such as 1, 2, 3, and they can be different, such as 101, 102, 103, and so on. If the asynchronous dual connectivity frequency band combination number is 3, the UE supports the carrier aggregation frequency band number 4 on MeNB (referring to Table 2.1 for frequency band 1 and frequency band 2) and the carrier aggregation frequency band number 2 on SeNB (referring to Table 2.1 for frequency band 2) for asynchronous dual connectivity.

**Table 2.2**

| Asynchronous dual connectivity frequency band combination number | On MeNB | On SeNB |
|---|---|---|
| 1 | 1 | 1 |
| 2 | 2 | 3 |
| 3 | 4 | 2 |

At Step 5: The base station acquires the capability information reported by the UE, and acquires the carrier aggregation and the synchronous dual connectivity of the UE supporting frequency band 1 and frequency band 2 and the asynchronous dual connectivity of supporting frequency band 1 and frequency band 2 on MeNB and frequency band 2 on SeNB, while cell 1 belongs to frequency band 1, and cell 2 and cell 4 belong to frequency band 2.

At Step 6: Since the services increases, and the signal quality of cell 2 and cell 4 is very good and the UE supports the asynchronous dual connectivity of frequency band 1 and frequency band 2 on MeNB and frequency band 2 on SeNB according to the measurement report, the base station configures cell 2 and cell 4 for the UE, and the UE receives and sends data of the asynchronous dual connectivity through cell 1, cell 2 and cell 4.

In the above Step 4, it is also possible to directly describe a specific frequency band combination as described in Table 2.3 below. Assume that the asynchronous dual connectivity frequency band combination number is 3, and the UE supports the asynchronous dual connectivity of frequency band 1 and frequency band 2 on MeNB and frequency band 2 on SeNB.

**Table 2.3**

| Asynchronous dual connectivity frequency band combination number | On MeNB | | On SeNB | |
|---|---|---|---|---|
| | A first frequency band | A second frequency band | A first frequency band | A second frequency band |
| 1 | 1 | NULL | | NULL |
| 2 | 2 | NULL | | NULL |
| 3 | 1 | 2 | | NULL |

### Embodiment three

The flow schematic diagram of the UE reporting the measuring capability and the base station configuring the dual connectivity according to the third embodiment of the present disclosure is shown in Fig. 5.

At Step 1: In this embodiment, the UE is in the connection state after the RRC establishment process is completed by the cell 1 in the E-UTRAN system.

At Step 2: The base station requests the UE to report the capability information. The UE reports the following carrier aggregation capability information according to its own capability: the UE supports frequency bands 1, 2 and 5, and supports up to three carriers for aggregation, wherein the first frequency band, the second frequency band and the third frequency band do not run in sequential order, just describing the support of the frequency on the first frequency band, the second frequency band and the third frequency band for carrier aggregation. The capability of supporting carrier aggregation reported by the UE in the third embodiment can be as shown in Table 3.1. Assume that the carrier aggregation frequency band combination number is 7, and the UE supports frequency band 1, frequency band 2 and frequency band 5 for carrier aggregation.

**Table 3.1**

| Carrier aggregation frequency band combination number | A first frequency band | A second frequency band | A third frequency band |
|---|---|---|---|
| 1 | 1 | NULL | NULL |
| 2 | 2 | NULL | NULL |
| 3 | 5 | NULL | NULL |
| 4 | 1 | 2 | NULL |
| 5 | 2 | 1 | NULL |
| 6 | 2 | 5 | NULL |
| 7 | 1 | 2 | 5 |

At Step 3: At the same time, the UE supports synchronous dual connectivity, and reports the capability of supporting synchronous dual connectivity. That is, the UE supports the synchronous dual connectivity of the frequency band combination in Table 3.1.

If the UE also supports the synchronous dual connectivity of frequency band 5 and frequency band 5, but the UE does not support the carrier aggregation UE of frequency band 5 and frequency band 5 and there is no corresponding carrier aggregation frequency band number, the UE needs to report the following additional content, wherein the synchronous dual connectivity frequency band combination number cannot be the same as the carrier aggregation frequency band combination number in Table 3.1.

**Table 3.2**

| Synchronous dual connectivity frequency band combination number | A first frequency band | A second frequency band | A third frequency band |
|---|---|---|---|
| 10 | 5 | 5 | NULL |

At Step 4: At the same time, the UE supports asynchronous dual connectivity, and reports the capability of supporting asynchronous dual connectivity. That is, the UE supports the asynchronous dual connectivity in Table 3.3. The asynchronous dual connectivity frequency band combination number in the table can be the same as the carrier aggregation frequency band number and the synchronous dual connectivity frequency band combination number in Table 3.1 and Table 3.2, such as 1, 2, 3, and they can be different, such as 101, 102, 103, and so on. If the asynchronous dual connectivity frequency band combination number is 104, the UE supports the carrier aggregation frequency band number 4 on MeNB (referring to Table 2.1 for frequency band 1 and frequency band 2) and the carrier aggregation frequency band number 6 on SeNB (referring to Table 2.1 for frequency band 2 and frequency band 5) for asynchronous dual connectivity.

**Table 3.3**

| Asynchronous dual connectivity frequency band combination number | On MeNB | On SeNB |
|---|---|---|
| 101 | 1 | 2 |
| 102 | 2 | 3 |
| 103 | 3 | 2 |
| 104 | 4 | 6 |

At Step 5: The base station acquires the capability information reported by the UE, and acquires the carrier aggregation and the synchronous dual connectivity of the UE supporting frequency band 1 and frequency band 2 and the asynchronous dual connectivity of supporting frequency band 1 and frequency band 2 on MeNB and frequency band 2 and frequency band 5 on SeNB, while cell 1 belongs to frequency band 1, cell 2 and cell 4 belong to frequency band 2, and cell 5 belongs to frequency band 5.

At Step 6: Since the sevice increases, and the signal quality of cell 2, cell 4 and cell 5 is very good and the UE supports the asynchronous dual connectivity of frequency band 1 and frequency band 2 on MeNB and frequency band 2 and frequency band 5 on SeNB according to the measurement report, the base station configures cell 2, cell 4 and cell 5 for the UE, and the UE receives and sends data of the asynchronous dual connectivity through cell 1, cell 2, cell 4 and cell 5.

### Embodiment four

The flow schematic diagram of the UE reporting the measuring capability and the base station configuring the dual connectivity according to the fourth embodiment of the present disclosure is shown in Fig. 5.

At Step 1: In this embodiment, the UE is in the connection state after the RRC establishment process is completed by the cell 1 in the E-UTRAN system.

At Step 2: The base station requests the UE to report the capability information. The UE reports the following carrier aggregation capability information according to its own capability: the UE supports frequency bands 1, 2 and 5, and supports up to two carriers for aggregation, wherein the first frequency band and the second frequency band do not run in sequential order, just describing the support of the frequency on the first frequency band and the second frequency band for carrier aggregation. The capability of supporting carrier aggregation reported by the UE in the fourth embodiment can be as shown in Table 4.1. Assume that the carrier aggregation frequency band combination number is 5, the UE supports frequency band 1 and frequency band 5 for carrier aggregation.

**Table 4.1**

| Carrier aggregation frequency band combination number | A first frequency band | A second frequency band |
|---|---|---|
| 1 | 1 | NULL |
| 2 | 2 | NULL |
| 3 | 5 | NULL |
| 4 | 1 | 2 |
| 5 | 1 | 5 |
| 6 | 2 | 1 |
| 7 | 2 | 5 |

At Step 3: At the same time, the UE supports synchronous dual connectivity and asynchronous dual connectivity, and does not need to separately report the capability of supporting synchronous dual connectivity and asynchronous dual connectivity, directly reporting that the UE supports synchronous dual connectivity and asynchronous dual connectivity in Table 4.2. The dual connectivity frequency band combination number in the table can be the same as the carrier aggregation frequency band number in Table 4.1, such as 1, 2, 3, and they can be different, such as 101, 102, 103, and so on. If the dual connectivity frequency band combination number is 3, the UE supports the carrier aggregation frequency band number 4 on MeNB (referring to Table 4.1 for frequency band 1 and frequency band 2) and the carrier aggregation frequency band number 2 on SeNB (referring to Table 4.1 for frequency band 2) for dual connectivity. On this basis, the UE also needs to report, to the base station, the specific frequency band combination for supporting synchronous and asynchronous dual connectivity by adding an indication behind each frequency band combination. Whether to support synchronous and asynchronous dual connectivity is as shown in the last two columns in Table 4.2: or the base station is indicated otherwise. In the manner of a bitmap, the bitmap supporting synchronous dual connectivity is 110, in which the first bit from the left indicates that the dual connectivity frequency band combination number 1 is set as 1 to support the synchronous dual connectivity, the second bit indicates that the dual connectivity frequency band combination number 2 is set as 1 to support the synchronous dual connectivity, and the third bit indicates that the dual connectivity frequency band combination number 3 is set as 0 to not support the synchronous dual connectivity; and the bitmap supporting asynchronous dual connectivity is 101, in which the first bit from the left indicates that the dual connectivity frequency band combination number 1 is set as 1 to support the asynchronous dual connectivity, the second bit indicates that the dual connectivity frequency band combination number 2 is set as 0 to not support the asynchronous dual connectivity, and the third bit indicates that the dual connectivity frequency band combination number 3 is set as 1 to support the asynchronous dual connectivity.

**Table 4.2**

| Dual connectivity frequency band combination number | On MeNB | On SeNB | Whether to support synchronous dual connectivity of the frequency band combination | Whether to support asynchronous dual connectivity of the frequency band combination |
|---|---|---|---|---|
| 1 | 1 | 1 | Yes | Yes |
| 2 | 2 | 3 | Yes | No |
| 3 | 4 | 2 | No | Yes |

At Step 5: The base station acquires the capability information reported by the UE, and acquires the carrier aggregation and the synchronous dual connectivity of the UE supporting frequency band 1 and frequency band 2 and the asynchronous dual connectivity of supporting frequency band 1 and frequency band 2 on MeNB and frequency band 2 on SeNB, while cell 1 belongs to frequency band 1, and cell 2 and cell 4 belong to frequency band 2.

At Step 6: Since the services increases, and the signal quality of cell 2 and cell 4 is very good and the UE supports the asynchronous dual connectivity of frequency band 1 and frequency band 2 on MeNB and frequency band 2 on SeNB according to the measurement report, the base station configures cell 2 and cell 4 for the UE, and the UE receives and sends data of the asynchronous dual connectivity through cell 1, cell 2 and cell 4.

It is to be noted that in the first to fourth embodiments, the UE may not have to report after the base station requests to report, but directly and actively report the dual connectivity capability information.

In view of the above, the embodiments of the present disclosure have the following beneficial effects that: employment of the above technical solution provided in the present disclosure extends the capability of the UE, thus enabling the base station to configure a suitable dual connectivity according to the dual connectivity capability of the UE, and enhancing user experience.

It should be noted that the "first", "second", "third" and "fourth" referred to in the embodiments of the present disclosure are used only for distinguishing and do not limit the order.

In another embodiment, there is also provided software for performing the technical solution described in the above embodiments and exemplary embodiments.

In another embodiment, there is also provided a storage medium in which the above software is stored, including but not limited to optical disks, floppy disks, hard disks, rewritable memories, and the like.

Obviously, those skilled in the art should know that each module or step of the embodiment of the present disclosure may be implemented by a universal computing device, and the modules or steps may be concentrated on a single computing device or distributed on a network formed by a plurality of computing devices, and may optionally be implemented by programmable codes executable for the computing devices, so that the modules or steps may be stored in a storage device for execution with the computing devices, and, in some cases, the steps shown or described may be performed in a order different from the order herein, or the modules or steps may form each integrated circuit module, or multiple modules or steps therein may form a single integrated circuit module for implementation. As a consequence, the present disclosure is not limited to any specific hardware and software combination.

The above is only the exemplary embodiment of the present disclosure and not intended to limit the present disclosure, and for the technician of the field, the present disclosure may have various modifications and variations. Any modifications, equivalent replacements, improvements and the like within the spirit and principle of the present disclosure shall fall within the scope of protection as defined in the present disclosure.

### Industrial Applicability

Base on the above technical solution provided in the present disclosure, employment of the technical means in which a UE reports to a base station indication information for indicating that the UE has a dual connectivity support capability solves the technical problem in the related art that the base station is incapable of learning that the UE has the dual connectivity support capability, thus enabling the base station to configure a suitable dual connectivity for the UE according to the dual connectivity capability of the UE, and enhancing user experience.

## Claims

1. A method for reporting a User Equipment (UE) capability, comprising:
reporting, by a UE, to a base station, indication information for indicating that the UE has a dual connectivity support capability.

2. The method according to claim 1, wherein the UE reports to the base station indication information for indicating that the UE has a dual connectivity support capability, comprising at least one of:
reporting, by the UE, to the base station, a first indication information for indicating that the UE has a synchronous dual connectivity support capability when the UE supports a synchronous dual connectivity; and
reporting, by the UE, to the base station, a second indication information for indicating that the UE has an asynchronous dual connectivity support capability when the UE supports an asynchronous dual connectivity.

3. The method according to claim 2, further comprising at least one of:
when the UE supports the synchronous dual connectivity, the first indication information indicates a synchronous dual connectivity of a frequency band combination corresponding to all carrier aggregations supported by the UE, or indicates a synchronous dual connectivity of a frequency band combination corresponding to a part of carrier aggregations supported by the UE and/or a frequency band combination other than the frequency band combination corresponding to the all carrier aggregations supported by the UE; and
when the UE supports the asynchronous dual connectivity, the second indication information individually indicates a frequency band combination that supports an asynchronous dual connectivity, or indicates a combination of frequency band combination numbers or a combination of frequency band combination indexes that supports the asynchronous dual connectivity.

4. The method according to claim 3, wherein the first indication information indicates the frequency band combination corresponding to the part of carrier aggregations by a bit value.

5. The method according to claim 1, wherein the indication information indicates that the UE has a dual connectivity support capability in the following manner:
individually indicating, in the indication information, each frequency band combination supported by the UE, or indicating a combination of frequency band combination numbers or frequency band combination indexes in the carrier aggregations supported by the UE; and further indicating, in the indication information, a dual connectivity type of one of the following: each frequency band combination, the combination of frequency band combination numbers, and the combination of frequency band combination indexes, wherein the dual connectivity type includes the synchronous dual connectivity and the asynchronous dual connectivity.

6. A method for acquiring a UE capability, comprising:
receiving, by a base station, indication information reported from a UE, wherein the indication information indicates that the UE has a dual connectivity support capability.

7. The method according to claim 6, wherein the base station receives the indication information reported by the UE, comprising one of:
receiving, by the base station, a first indication information reported by the UE when the UE supports the synchronous dual connectivity, wherein the first indication information indicates that the UE has a synchronous dual connectivity support capability; and
receiving, by the base station, a second indication information reported by the UE when the UE supports the asynchronous dual connectivity, wherein the second indication information indicates that the UE has an asynchronous dual connectivity support capability.

8. The method according to claim 7, further comprising at least one of:
when the UE supports the synchronous dual connectivity, the first indication information indicates a synchronous dual connectivity of a frequency band combination corresponding to all carrier aggregations supported by the UE; or the first indication information indicates a synchronous dual connectivity of a frequency band combination corresponding to a part of carrier aggregations supported by the UE and/or a frequency band combination other than the frequency band combination corresponding to the all carrier aggregations supported by the UE; and
when the UE supports the asynchronous dual connectivity, the second indication information individually indicates a frequency band combination that supports an asynchronous dual connectivity, or indicate a combination of frequency band combination numbers or a combination of frequency band combination indexes that supports the asynchronous dual connectivity.

9. The method according to claim 6, wherein the indication information is used to indicate that the UE has a dual connectivity support capability in the following manner:
individually indicating, in the indication information, each frequency band combination supported by the UE, or a combination of frequency band combination numbers, or indicating frequency band combination indexes in the carrier aggregations supported by the UE; and further indicating, in the indication information, a dual connectivity type of one of the following: each frequency band combination, the combination of frequency band combination numbers, and the combination of frequency band combination indexes, wherein the dual connectivity type includes the synchronous dual connectivity and the asynchronous dual connectivity.

10. A device for reporting a UE capability, applied to a UE, comprising:
a reporting module, configured to report, to a base station, indication information for indicating that the UE has a dual connectivity support capability.

11. A device for acquiring a UE capability, applied to a base station, comprising:
a receiving module, configured to receive indication information reported from a UE, wherein the indication information indicates that the UE has a dual connectivity support capability.
